# EUROPEAN PATENT SPECIFICATION

(11) **EP 3 530 133 B1**
(45) Date of publication and mention of the grant of the patent: **09.02.2022**
(21) Application number: 16919272.1
(22) Date of filing: 21.10.2016
(51) Int. Cl.: A41D 31/02, B32B 5/26, A41D 31/04, B32B 3/26, B32B 5/06, B32B 5/10, B32B 27/12, B32B 27/16, B32B 27/40, A41D 31/06

(54) **FEATHER PRODUCTS**
FEDERPRODUKTE
PRODUITS À BASE DE PLUMES

(43) Date of publication of application: 28.08.2019
(73) Proprietor: Jiaxing Deyong Textiles Co., Ltd., Pinghu, Zhejiang 314205 (CN)
(72) Inventor: MATSUMOTO, Yasuhiro, Pinghu Zhejiang 314205 (CN); LI, Xuefeng, Pinghu Zhejiang 314205 (CN); LU, Peiliang, Pinghu Zhejiang 314205 (CN)
(74) Representative: J A Kemp LLP
(86) International application number: PCT/CN2016/102834
(87) International publication number: WO 2018/072196

(56) References cited:
- CN-A- 104 705 880
- CN-A- 105 128 442
- CN-U- 201 700 424
- CN-U- 202 286 371
- CN-U- 202 941 787
- JP-U- 3 134 608
- JP-U- S61 147 214

## Description

### Technical Field

The present invention relates to a feather product capable of suppressing the protrusion of feathers.

### Background Art

In the down wear described in Patent Literature 1, a down pack in which feathers are wrapped in a fabric is disposed between a top fabric and a backing fabric. By wrapping the feathers in the fabric, the feathers are prevented from coming out from the top fabric or the backing fabric. CN202286371U discloses a down-proof and pile-up prevention down jacket.

### Citation List

### Patent Literature

Patent Literature 1: JU3134608
Patent Literature 2: JP2012-010764
Patent Literature 3: JP2001-115358
Patent Literature 4: JP2004-060066

### Summary of Invention

### Technical Problem

Even if feathers are wrapped in a fabric for a down pack as in Patent Literature 1, when the down pack is extended, gaps formed in the construction of the fabric expand, so that feathers come out from the gaps.

### Solution to Problem

The feather product of the present invention is defined by the claims.

According to the present invention, since the feather bag body is covered with the first film and the second film, it is possible to prevent the feathers accommodated in the bag portion from coming out to the outside of the feather product.

The first film and the second film may be provided with pores. In this case, it is possible to arrange a top interlock fabric on the front side of the first film and to arrange a backing interlock fabric on the back side of the second film. The first film and the second film can be protected by arranging the top interlock fabric and the backing interlock fabric, respectively. In addition, the first film and the second film can be covered by the top interlock fabric and the backing interlock fabric, so that the protrusion of the feathers to the outside of the feather product can be suppressed.

The first film may be provided with pores. In this case, a top interlock fabric can be arranged on the front side of the first film. As the textiles constituting the feather bag body, a plain knitted fabric can be used.

### Brief Description of Drawings

FIG. 1 is a diagram illustrating a cross-sectional structure (five-layer structure) of a feather product, which is a first embodiment.
FIG. 2 is a diagram illustrating a cross-sectional structure (four-layer structure) of a feather product, which is a second embodiment.
FIG. 3 is a diagram illustrating a cross-sectional structure (three-layer structure) of a feather product, which is a third embodiment.

### Description of Embodiments

### (First Embodiment)

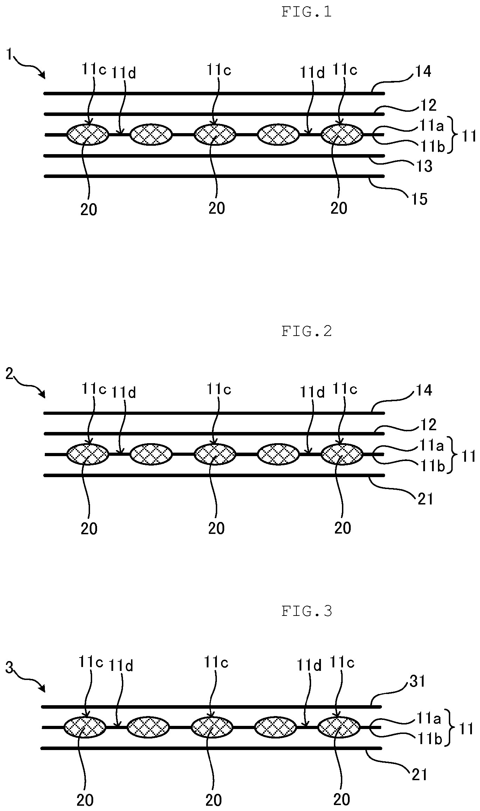

A description will now be given of a structure of a feather product, which is a first embodiment of the present invention, with reference to FIG. 1. FIG. 1 shows a cross-sectional structure of a feather product 1. As shown in FIG. 1, the feather product 1 has a five-layer structure.

A feather bag body 11 is arranged in the center layer of the feather product 1. The feather bag body 11 is constituted by two layers (one pair) of textiles 11a and 11b. By constituting the feather bag body 11 by the textiles 11a and 11b, the feather product 1 can be made to have stretching properties (stretchability).

The textile is produced by forming loops using a thread-like material and continuing the loops. The textile has a construction of weft knitting or warp knitting. As the weft knitted fabric, for example, there are a plain knitted modified construction, a rib knitted modified construction, an interlock knitted modified construction, and a purl knitted modified construction. Examples of the warp knitted fabric include a tricot fabric and a russel fabric. In the present embodiment, it is preferable to use a plain knitted fabric (a plain stitch fabric) as the textiles 11a and 11b.

A plurality of bag portions 11c and a plurality of binding portions 11d are formed in the feather bag body 11 by binding parts of the two layers of textiles 11a and 11b to each other by a binding yarn. The inside of each bag portion 11c is filled with feathers 20. Since the binding portions 11d surround the outer edge of each bag portion 11c, the feathers 20 filled in the bag portion 11c are prevented from coming out of the bag portion 11c.

For the respective textiles 11a and 11b, the courses (Course) may be 19 per cm (47 per inch) and the wales (Wale) may be 16 per cm (40 per inch). This makes it easier to suppress the occurrence of variations in the density and weight of the textiles 11a and 11b.

As the yarns constituting the textiles 11a and 11b, a draw textured yarn (DTY; Draw Textured Yarn) formed of polyester may be used. Herein, the draw textured yarn made of polyester may preferably be any of 55, 83, and 110 dTex. More preferably, the draw textured yarn made of polyester may be 83 dTex. In order to improve the productivity of the textiles 11a and 11b and to reduce the yarn amount, it is preferable to use an 83 dTex draw textured yarn.

As the yarns constituting the textiles 11a and 11b, a multifilament is used. For example, when a 55 dTex multifilament is used, 144 monofilaments (single yarns) can constitute the multifilament. If an 83 dTex multifilament is used, 48 monofilaments (single yarns) can constitute the multifilament. If a 110 dTex multifilament is used, 96 monofilaments (single yarns) can constitute the multifilament.

As the single yarn (single fiber) constituting the multifilament, a draw textured yarn made of polyester may be used, and the single yarn fineness of the draw textured yarn made of polyester may be 0.382 to 1.729 dTex. When the single yarn fineness is smaller than 0.382 dTex, the texture of the textiles 11a and 11b becomes soft, and the textiles 11a and 11b constituting the bag portion 11c easily come into close contact with each other. On the other hand, when the single yarn fineness is larger than 1.729 dTex, the texture of the textiles 11a and 11b becomes hard, which is not suitable for the feather product 1. In order to give the textiles 11a and 11b an appropriate texture (in other words, resilience), it is preferable to set the single yarn fineness to 0.382 to 1.729 dTex.

The distance between the two bag portions 11c arranged adjacent to each other, that is, the length of the binding portion 11d may be appropriately set. For example, the distance between the two bag portions 11c may be set to any of 2 cm, 3 cm, 5 cm, 7 cm, 10 cm, and 15 cm.

Films (polyurethane films) 12 and 13 formed of polyurethane are disposed on the front side and the back side of the feather bag body 11, respectively. That is, the feather bag body 11 is sandwiched between two polyurethane films 12 and 13. Each of the polyurethane films 12 and 13 has a plurality of pores. The size (maximum diameter) of a pore may be 0.3 to 10.0 µm. Herein, the polyurethane film 12 corresponds to the first film in the present invention, and the polyurethane film 13 corresponds to the second film in the present invention.

Each of the polyurethane films 12 and 13 may be bonded to the feather bag body 11 by using an adhesive. More specifically, in the region where the polyurethane films 12 and 13 and the feather bag body 11 are bonded to each other, an adhesive may be applied to a plurality of spot portions. For example, the adhesive may be applied at 3 to 6 spot portions per square cm (20 to 40 spot portions per square inch). This makes it possible to suppress the polyurethane films 12 and 13 from peeling off from the feather bag body 11, and to set the used amount of the adhesive to an appropriate amount.

The thickness of each of the polyurethane films 12 and 13 may be 9 to 15 µm. This makes it easier to make the thickness of the polyurethane films 12 and 13 uniform when the polyurethane films 12 and 13 are produced. The weight of each of the polyurethane films 12 and 13 may be 9 to 15 g/m². The air permeability of each of the polyurethane films 12 and 13 is preferably 7.72×10⁻⁴ to 8.99×10⁻⁴ m³ s⁻¹ m⁻² (0.152 to 0.177 CFM). The total area of the pores per unit area of each of the polyurethane films 12 and 13 may be determined so as to obtain air permeability falling within this range.

The water pressure resistance of each of the polyurethane films 12 and 13 is preferably 4000 to 5000 mm. The moisture permeability of each of the polyurethane films 12 and 13 is preferably 8000 [g/m2/h] or more in accordance with the A-1 method prescribed in JIS L1099 and10000 [g/m2/h] or more in accordance with the B-1 methodprescribed in JIS L1099. When the thickness of each of the polyurethane films 12 and 13 is 9 to 15 µm, the water pressure resistance and the moisture permeability can be set to fall within the above-mentioned numerical ranges, respectively.

Each of the polyurethane films 12 and 13 may be transparent or colored. When at least one of the polyurethane films 12 and 13 is colored, the color of the polyurethane film 12 or 13 may be the same color as the color of the textiles 11a and 11b constituting the feather bag body 11 or a color close to the color of the textiles 11a and 11b.

The polyurethane films 12 and 13 may be subjected to various surface treatments. Specifically, dull, glossy, or uneven texture may be imparted to the surfaces of the polyurethane films 12 and 13. Herein, both surfaces or one surface of the polyurethane films 12 and 13 may be subjected to the surface treatment. When one surface of the polyurethane films 12 and 13 is subjected to the surface treatment, it is preferable to perform surface treatment on the surface of the polyurethane films 12 and 13 that are directed to the outside of the feather product 1.

An interlock fabric (interlock knitted fabric) 14 as a top fabric is disposed on the front side of the polyurethane film 12. An interlock fabric (interlock knitted fabric) 15 as a backing fabric is disposed on the back side of the polyurethane film 13. The polyurethane films 12 and 13 can be protected by covering them with the interlock fabrics 14 and 15, respectively.

The interlock fabric 14 may be bonded to the polyurethane film 12 using an adhesive. The interlock fabric 15 may be bonded to the polyurethane film 13 using an adhesive. Herein, in the region where the interlock fabric 14 and the polyurethane film 12 are bonded to each other, or in the region where the interlock fabric 15 and the polyurethane film 13 are bonded to each other, an adhesive may be applied to a plurality of spot portions. For example, the adhesive may be applied at 3 to 6 spot portions per square cm (20 to 40 spot portions per square inch). This makes it possible to suppress the interlock fabrics 14 and 15 from peeling off the polyurethane films 12 and 13, and to set the used amount of the adhesive to an appropriate amount.

As the yarns constituting the interlock fabrics 14 and 15, a draw textured yarn (DTY) formed of polyester may be used. Herein, the draw textured yarn made of polyester may preferably be any of 17, 22, and 33 dTex. More preferably, the draw textured yarn made of polyester may be 22 dTex from the viewpoint of reducing the weight of the interlock fabrics 14 and 15 while having the texture as the feather product 1.

As the yarns constituting the interlock fabrics 14 and 15, a multifilament may be used. As the single yarn (single fiber) constituting the multifilament, a draw textured yarn made of polyester may be used, and the single yarn fineness of the draw textured yarn made of polyester may be 0.617 to 1.158 dTex. When the single yarn fineness is smaller than 0.617 dTex, the friction durability of the drawn textured yarn tends to be lowered. In addition, when the single yarn fineness is larger than 1.158 dTex, the smoothness when touching the interlock fabrics 14 and 15 is likely to be lowered. Therefore, from the viewpoint of ensuring the friction durability of the drawn textured yarn and the smoothness of the interlock fabrics 14 and 15, the single yarn fineness is preferably 0.617 to 1.158 dTex. More preferably, the single yarn fineness may be 0.926 dTex.

The surface of the interlock fabric (top fabric) 14 may be subjected to a water repellent treatment. As the water repellent treatment, a known technology can be employed.

When the water repellent treatment is performed, it is preferable that, when the water repellency is measured according to the following test method, the initial (L0) water repellency is grade 5 or more, and the water-repellency after 20 washings (L20) is grade 3 or more. The evaluation of the water repellency is specified in "5.2 Water Repellency (spraying method) " of JIS L1092. In addition, the washing may be performed according to JIS L0217 to measurethe initial (L0) water repellency prior to washing and the water repellency after 20 washings (L20).

After the surface of the interlock fabric (top fabric) 14 is subjected to the water repellent treatment, it is possible to suppress the entry of water into the inside of the feather product 1 from the outside of the feather product 1. On the other hand, the interlock fabric (backing fabric) 15 is preferably not subjected to the water repellent treatment. As a result, the vapor generated from the human body easily passes through the interlock fabric (backing fabric) 15, and the feather product 1 can absorb the vapor from the human body.

Next, a method for producing the feather product 1 will be described.

First, the feathers 20 are filled in the inside of the bag portion 11c while part of the textiles 11a and 11b constituting the feather bag body 11 are bound to each other. Thus, the feather bag body 11 is produced. Next, the interlock fabric 14 is bonded to the polyurethane film 12 using an adhesive, and the interlock fabric 15 is bonded to the polyurethane film 13 using an adhesive.

Next, the polyurethane film 13 to which the interlock fabric 15 has been bonded and the polyurethane film 12 to which the interlock fabric 14 has been bonded are bonded to the feather bag body 11 by an adhesive. By doing so, the feather product 1 can be produced.

In the present embodiment, the interlock fabrics 14 and 15 are used as the top fabric and the backing fabric of the feather product 1, but a knitted construction other than the interlock knitting can be used. In addition, decoration may be applied to at least one of the top fabric and the backing fabric of the feather product 1 by crossknitting the draw stretched yarn made of polyester and the cationic dyeable yarn.

According to the present embodiment, by covering the bag portion 11c with the polyurethane films 12 and 13, it is possible to prevent the feathers 20 from coming out to the outside of the feather product 1. If only the feathers 20 are accommodated in the bag portion 11c, as described above, when the bag portion 11c is extended, the gaps in the knitted constructions of the textiles 11a and 11b are widened, and the feathers 20 may enter the gaps. In particular, since the textiles 11a and 11b excellent in stretching properties (stretchability) are used in the feather product 1, even if the textiles 11a and 11b are knitted so as to increase the density of the textiles 11a and 11b, the gaps in the textiles 11a and 11b are widened by the extension of the textiles 11a and 11b. As a result, the feathers 20 enter the gaps in the textiles 11a and 11b.

Therefore, in the present embodiment, by covering the bag portion 11c with the polyurethane films 12 and 13, even if the feathers 20 enter the gaps in the textiles 11a and 11b and attempt to come out to the outside of the bag portion 11c, the protrusion of the feathers 20 can be suppressed by the polyurethane films 12 and 13.

Since the polyurethane films 12 and 13 are excellent in stretchability, the polyurethane films 12 and 13 can follow the stretching of the bag portion 11c. As a result, the stretching properties (stretchability) can be imparted to the feather product 1. Further, even if the bag portion 11c is extended and the gaps in the knitted constructions of the textiles 11a and 11b are widened, the gaps in the knitted constructions of the textiles 11a and 11b can be kept being covered with the extended polyurethane films 12 and 13. Thus, it is possible to suppress the feathers 20 from coming out to the outside of the feather product 1.

In the present embodiment, pores are formed in the polyurethane films 12 and 13, but the size of the pores is smaller than the size through which the feathers 20 can pass. Therefore, it is possible to suppress the feathers 20 from coming out from the pores of the polyurethane films 12 and 13. In addition, when the polyurethane films 12 and 13 are extended, the pores are deformed to reduce the opening area of the pores, thereby suppressing the protrusion of the feathers 20 from the pores of the polyurethane films 12 and 13.

In addition, by using a multifilament as the yarn constituting the textiles 11a and 11b, the air permeability of the bag portion 11c can be ensured by utilizing gaps formed between a plurality of single yarns (single fibers) constituting the multifilament.

### (Second Embodiment)

The structure of the feather product which is a second embodiment of the present invention will be described with reference to FIG. 2. FIG. 2 shows a cross-sectional structure of the feather product 2. As shown in FIG. 2, the feather product 2 has a four-layer structure. In the present embodiment, the same members as those described in the first embodiment are denoted by the same reference numerals, and a detailed description thereof is omitted.

In the present embodiment, the interlock fabric 15 as the backing fabric described in the first embodiment is omitted. While the polyurethane film 13 having pores is used in the first embodiment, a polyurethane film 21 having no pores is used in the present embodiment instead of the polyurethane film 13 of the first embodiment. Herein, the polyurethane film 21 corresponds to the second film in the present invention.

Since the polyurethane film 21 is excellent in abrasion resistance, the interlock fabric 15 described in the first embodiment can be omitted. In addition, since the polyurethane film 21 serves as a backing fabric of the feather product 2, it is preferable that the swelling property thereof is low.

The polyurethane film 21 may be bonded to the feather bag body 11 by using an adhesive. Herein, in the region where the polyurethane film 21 and the feather bag body 11 are bonded to each other, an adhesive may be applied to a plurality of spot portions. For example, the adhesive may be applied at 3 to 6 spot portions per square cm (20 to 40 spot portions per square inch). This makes it possible to suppress the polyurethane film 21 from peeling off from the feather bag body 11, and to set the used amount of the adhesive to an appropriate amount.

Next, a method for producing the feather product 2 will be described.

First, similarly to the first embodiment, the feather bag body 11 is produced. Next, the polyurethane film 21 is bonded to the feather bag body 11 using an adhesive. The interlock fabric 14 is also bonded to the polyurethane film 12 using an adhesive. Next, the polyurethane film 12 to which the interlock fabric 14 has been bonded is bonded to the feather bag body 11, to which the polyurethane film 21 has been bonded, by using an adhesive. By doing so, the feather product 2 can be produced.

Also in this embodiment, as in the first embodiment, since the feather bag body 11 is sandwiched between the polyurethane films 12 and 21, the protrusion of the feathers 20 can be suppressed. Further, in the present embodiment, since the interlock fabric 13 is omitted and so the bonding of the interlock fabric 13 can be omitted, the production process of the feather product 2 can be simplified and the cost of the feather product 2 can be reduced as compared to the first embodiment.

The feather product 2 of the present embodiment has the four-layer structure, and the number of layers is smaller than that of the five-layer structure of the feather product 1 of the first embodiment. This makes it possible to reduce the number of bonding portions by the adhesive, and to improve the stretching properties (stretchability) of the feather product 2 as compared to the first embodiment. Further, the polyurethane film 21 does not have pores, and is superior in stretching properties (stretchability) to the polyurethane film 13 having pores. Therefore, the use of the polyurethane film 21 having no pores can improve the stretching properties (stretchability) of the feather product 2 as compared to the first embodiment.

### (Third Embodiment)

The structure of the feather product which is the third embodiment of the present invention will be described with reference to FIG. 3. FIG. 3 shows a cross-sectional structure of the feather product 3. As shown in FIG. 3, the feather product 3 has a three-layer structure. In the present embodiment, the same members as those described in the first embodiment and the second embodiment are denoted by the same reference numerals, and a detailed description thereof is omitted.

In the present embodiment, the interlock fabric (top fabric) 14 and the interlock fabric (backing fabric) 15 described in the first embodiment are omitted. While the polyurethane films 12 and 13 having pores are used in the first embodiment, polyurethane films 21 and 31 having no pores are used in the present embodiment. Herein, the polyurethane film 31 corresponds to the first film in the present invention.

Since the polyurethane film 31 is excellent in abrasion resistance, the interlock fabric 14 described in the first embodiment can be omitted. In addition, since the polyurethane film 31 serves as a top fabric of the feather product 2, it is preferable that the swelling property thereof is low.

The polyurethane film 31 may be bonded to the feather bag body 11 by using an adhesive. Herein, in the region where the polyurethane film 31 and the feather bag body 11 are bonded to each other, an adhesive may be applied to a plurality of spot portions. For example, the adhesive may be applied at 3 to 6 spot portions per square cm (20 to 40 spot portions per square inch). This makes it possible to suppress the polyurethane film 31 from peeling off from the feather bag body 11, and to set the used amount of the adhesive to an appropriate amount.

Next, a method for producing the feather product 3 will be described.

First, similarly to the first embodiment, the feather bag body 11 is produced. Next, the polyurethane film 31 is bonded to the feather bag body 11 using an adhesive. Next, the polyurethane film 21 is bonded to the feather bag body 11, to which the polyurethane film 31 has been bonded, by using an adhesive. By doing so, the feather product 3 can be produced.

Also in this embodiment, as in the first embodiment and the second embodiment, since the feather bag body 11 is sandwiched between the polyurethane films 21 and 31, the protrusion of the feathers 20 can be suppressed. Further, in the present embodiment, since the interlock fabrics 14 and 15 are omitted and so the bonding of the interlock fabrics 14 and 15 can be omitted, the production process of the feather product 3 can be simplified and the cost of the feather product 3 can be reduced as compared to the first embodiment and the second embodiment.

The feather product 3 of the present embodiment has the three-layer structure, and the number of layers is smaller than that of the four-layer structure of the feather product 2 of the second embodiment. This makes it possible to reduce the number of bonding portions by the adhesive, and to improve the stretching properties (stretchability) of the feather product 3 as compared to the second embodiment. Further, the polyurethane films 21 and 31 do not have pores, and are superior in stretching properties (stretchability) to the polyurethane films 12 and 13 having pores. Therefore, the use of the polyurethane films 21 and 31 having no pores can improve the stretching properties (stretchability) of the feather product 3 as compared to the second embodiment.

The feather products 1 to 3 according to the first to third embodiments can be used for down wears such as a down jacket, a down coat, and a down pant.

### Reference Signs List

1 to 3: feather product, 11: feather bag body, 11a, 11b: textiles, 11c: bag portion
11d: binding portion, 12, 13, 21, 31: polyurethane film
14, 15: interlock fabric, 20: feather

## Claims

1. A feather product (1) comprising:
a feather bag body (11) that includes a plurality of bag portions (11c) each accommodating feathers (20);
a first film (12) that covers a front side of the feather bag body (11) and is formed of polyurethane; and
a second film (13) that covers a back side of the feather bag body (11) and is formed of polyurethane,
**characterized in that**
the feather bag body (11) is constituted by a pair of textiles (11a, 11b) and further includes a plurality of binding portions (11d), which are formed by binding parts of the pair of textiles (11a, 11b) to each other by a binding yarn, and which surround an outer edge of each of the bag portions (11c), and
each textile (11a, 11b) is constituted by a yarn which is a multifilament.

2. The feather product (1) according to claim 1, wherein
the first film (12) and the second film (13) have pores, and
the feather product (1) has
a top interlock fabric (14) disposed on a front side of the first film (12), and
a backing interlock fabric (15) disposed on a back side of the second film (13).

3. The feather product (1) according to claim 1, wherein
the first film (12) has pores, and
the feather product (1) has a top interlock fabric (14) disposed on a front side of the first film (12).

4. The feather product (1) according to any one of claims 1 to 3, wherein the textile (11a, 11b) is a plain knitted fabric.

## Patentansprüche

1. Federprodukt (1), das Folgendes umfasst:
einen Federtaschenkörper (11), der eine Vielzahl von Taschenabschnitten (11c) umfasst, die jeweils Federn (20) aufnehmen;
eine erste Folie (12), die eine Vorderseite des Federtaschenkörpers (11) bedeckt und aus Polyurethan gebildet ist; und
eine zweite Folie (13), die eine Rückseite des Federtaschenkörpers (11) bedeckt und aus Polyurethan gebildet ist,
**dadurch gekennzeichnet, dass**
der Federtaschenkörper (11) aus einem Paar von Textilien (11a, 11b) besteht und ferner eine Vielzahl von Bindeabschnitten (11d) aufweist, die durch Binden von Teilen des Paares von Textilien (11a, 11b) aneinander durch ein Bindegarn gebildet werden und die einen äußeren Rand jedes der Taschenabschnitte (11c) umgeben, und
jedes Textil (11a, 11b) aus einem Garn besteht, das ein Multifilament ist.

2. Federprodukt (1) nach Anspruch 1, wobei
die erste Folie (12) und die zweite Folie (13) Poren aufweisen, und
das Federprodukt (1) folgendes aufweist:
ein oberes Interlock-Gewebe (14), das auf einer Vorderseite der ersten Folie (12) angeordnet ist, und
ein hinteres Interlock-Gewebe (15), das auf einer Rückseite der zweiten Folie (13) angeordnet ist.

3. Federprodukt (1) nach Anspruch 1, wobei
die erste Folie (12) Poren aufweist, und
das Federprodukt (1) ein oberes Interlock-Gewebe (14) aufweist, das auf einer Vorderseite der ersten Folie (12) angeordnet ist.

4. Federprodukt (1) nach einem der Ansprüche 1 bis 3, wobei das Textil (11a, 11b) ein Strickgewebe ist.

## Revendications

1. Produit à base de plume (1) comprenant :
un corps de sac à base de plume (11) qui comprend une pluralité de parties de sac (11c) logeant chacune des plumes (20) ;
un premier film (12) qui recouvre une face avant du corps de sac à base de plume (11) et est formé de polyuréthane ; et
un deuxième film (13) qui recouvre une face arrière du corps de sac à base de plume (11) et est formé de polyuréthane,
**caractérisé en ce que**
le corps du sac à base de plume (11) est constitué d'une paire de textiles (11a, 11b) et comprend en outre une pluralité de parties de liaison (11d), qui sont formées en liant des parties de la paire de textiles (11a, 11b) les unes aux autres par un fil de liaison, et qui entourent un bord extérieur de chacune des parties de sac (11c), et
chaque textile (11a, 11b) est constitué d'un fil qui est un multifilament.

2. Produit à base de plume (1) selon la revendication 1, dans lequel
le premier film (12) et le deuxième film (13) ont des pores, et
le produit à base de plume (1) a
un tissu interlock supérieur (14) disposé sur une face avant du premier film (12), et
un tissu interlock de support (15) disposé sur une face arrière du deuxième film (13).

3. Produit à base de plume (1) selon la revendication 1, dans lequel
le premier film (12) a des pores, et
le produit à base de plume (1) a un tissu interlock supérieur (14) disposé sur une face avant du premier film (12).

4. Produit à base de plume (1) selon l'une quelconque des revendications 1 à 3, dans lequel le textile (11a, 11b) est un tissu tricoté simple.
